# EUROPEAN PATENT SPECIFICATION

(11) **EP 3 778 478 B1**
(45) Date of publication and mention of the grant of the patent: **04.05.2022**
(21) Application number: 19913669.8
(22) Date of filing: 06.12.2019
(51) Int. Cl.: C01B 32/348, C01B 32/354

(54) **METHOD FOR PREPARING STALACTITE-LIKE MACROPOROUS ACTIVATED CARBON**
VERFAHREN ZUR HERSTELLUNG VON STALAKTITÄHNLICHER MAKROPORÖSER AKTIVKOHLE
PROCÉDÉ DE PRÉPARATION DE CHARBON ACTIF MACROPOREUX DE TYPE STALACTITE

(30) Priority: 28.01.2019 CN 201910080776
(43) Date of publication of application: 17.02.2021
(73) Proprietor: Guizhou Meiling Power Sources Co., Ltd., Zunyi, Guizhou 563000 (CN)
(72) Inventor: GUO, Hao, Zunyi, Guizhou 563000 (CN); TANG, Licheng, Zunyi, Guizhou 563000 (CN); WU, Ningning, Zunyi, Guizhou 563000 (CN); CHEN, Xiaotao, Zunyi, Guizhou 563000 (CN); SHI, Bin, Zunyi, Guizhou 563000 (CN); CHEN, Ting, Zunyi, Guizhou 563000 (CN)
(74) Representative: Ipey
(86) International application number: PCT/CN2019/123705
(87) International publication number: WO 2020/155856

(56) References cited:
- CN-A- 102 442 665
- CN-A- 105 621 410
- CN-A- 106 698 427
- CN-A- 108 963 291
- CN-A- 109 607 533
- JP-B2- 3 721 531
- KR-B1- 101 584 175
- US-A1- 2009 080 142
- US-A1- 2014 294 717

## Description

### Technical field

The invention belongs to the technical field of activated carbon materials, and particularly relates to a preparation method of stalactite-like macroporous activated carbon.

### Background

Activated carbon has the advantages of high specific surface area, low cost, high chemical and thermal stability, and high electrical conductivity. Although the conventional activated carbon has a specific surface area of more than 2000 m²/g, the actual utilization rate is not high. The reason is that the porous activated carbon materials prepared under the existing process conditions cannot avoid the formation of micropores with the pore diameter of less than 2 nm, while the ideal porous carbon materials can effectively form electric double layer or be used for material growth only when the pore diameter is greater than 2 nm. Therefore, it is necessary to adopt a chemical activation method to increase the specific surface area and control the diameter of the micropores so that the diameter is greater than 2 nm.

The traditional chemical activation process of the activated carbon usually uses a tube furnace or an atmosphere furnace with nitrogen or argon protection. Firstly, it is pre-fired at 350 °C for 1.5h ~ 3h, and then it is activated for 1h ~ 3h above 800 °C. The activation time is relatively long. The whole activation process and heating process takes at least 4h, which leads to high consumption of the energy and protective gas. Therefore, how to reduce energy consumption and time cost is the key to large-scale commercial application of high specific area and high specific capacitance activated carbon.

At present, there are some patents on the preparation of activated carbon. For example, the patent application CN107973296A discloses a large-pore activated carbon and its preparation method, in which claim 1 discloses the following steps: Step 1, crush the raw material of activated carbon, immerse the crushed raw material in ethanol solution which is mixed herein with hydroxide as pore expanding agent, after ultrasonic vibration, washing with water, and drying, pretreated activated carbon can be obtained; Step 2, the pretreated activated carbon is added with surfactant, soaked at 80-100 °C for 7-9h, stirred once every 2-3h to make it evenly mixed; Step 3, the pretreatment activated carbon is obtained by being heated for 2-4 hours at heating temperature 300-500 °C and under the protection of nitrogen, then, heating for another 1-3 hours at 700-800 °C,under. the protection of a mixture of water vapor and carbon dioxide,, large-pore activated carbon can be eventually obtained. The beneficial effects are Firstly, using physical and chemical methods to act simultaneously to expand the hole; secondly, the mixed gas of carbon dioxide and water vapor is used for physical activation during the activation process, which broadens the pore size of the activated carbon under the synergistic effect of the two.

US2009/080142 discloses a method for preparing activated carbon comprising ball milling graphitizable coke with CaC03 and KOH powder followed by heating and classifying.

CN107226470A discloses a preparation method of macroporous biological activated carbon without adhesive gap, which comprises the following steps: (1) The raw materials are bamboo, crushed and sieved,. take 80±5 mesh bamboo scraps, and the moisture content is 8±0.5%;(2) Briquetting granulation at a compression ratio of 1:5 to 1:10, the compression ratio refers to diameter/length; (3) Carbonization treatment: the carbonization temperature is 450-700°C, and the carbonization time is 0.5-2.5h; (4) Activation reaction: The activation temperature is 700-1000°C, and the activation time is 1-3.5h.

CN107140635A discloses the following steps: (1) The raw materials are bamboo, crushed and sieved, take 80±5 mesh bamboo scraps, and the moisture content is 8±0.5%;(2) Add bonding agent, the amount of bonding agent is 5-35% (weight) of the bamboo chips, and mix them evenly; (3) Briquetting granulation at a compression ratio of 1:5 to 1:10, the compression ratio refers to diameter/length; (4) Carbonization treatment: the carbonization temperature is 450-700°C, and the carbonization time is 0.5-2.5h; (5) Activation reaction: The activation temperature is 700-1000°C, and the activation time is 1-3.5h.

However, in the method for preparing activated carbon disclosed above, the activation reaction temperature is above 700°C, the activation time is 1~3h, the high activation temperature and the long time required for activation will result in the high consumption of energy and protective gas.

In addition, there is also patent application CN102442665A, which discloses a heat-treated activated carbon and a preparation method thereof, wherein, the high-temperature treated activated carbon and the pore expanding agent are evenly mixed, and the heat-treated activated carbon with high mesoporous and macroporous ratios can be obtained by expanding the pore at 300-1000 °C for 0.1-48 hours. However, the patent application relies on extremely high ambient temperature to conduct long-term pretreatment of the material and then reduce the temperature for preparation (all embodiments mentioned that "the commercial activated carbon should be placed in argon at 1850 °C for 1 hour"), the required temperature is far higher than the environmental temperature in the present application, and the energy consumption is also relatively very high. The patent application is actually overly dependent on a higher ambient temperature, which does not meet the requirements of low temperature and low energy consumption.

Patent application CN109179404A discloses a method for preparing mesoporous activated carbon from long flame coal in which a single long flame coal is selected, and a multiple composite binder is used. The amount of raw coal is 60% ~ 80%, the amount of binder is 10% ~ 25%, and the amount of water is 3% ~ 10%. The raw materials are processed by powdering and bonding, beading granulation, carbonization and secondary carbonization, activation, etc., to finally obtain macroporous activated carbon in long flame coal.

Patent application CN109081344A discloses a preparation process of large pore size activated carbon. The activated carbon adopts activated carbon products, and the steps include DMF process and activation process, in which DMF process: the activated carbon is immersed in DMF solution for 12 hours; Activation process: the activated carbon impregnated in the DMF process is put into the cremation furnace for activation, and then taken out after the temperature has raised to 850 °C for 1 hour, to obtain macroporous activated carbon.

CN108963291A discloses a thin thermal battery with independent electrode system and heating system, including electrode system and heating system. The heating system is wrapped by a heat conductive insulating layer, and the heating system supplies heat to the electrode system from all around. However, belongs to the design and composition of thermal battery, not to the field of carbonization material technology, and from the perspective of principle, efficacy, structure and element composition, thermal battery and carbon material are significantly different. Moreover, cannot solve the technical problems of high activation temperature, long activation time and high consumption of energy and protective gas in the preparation process of activated carbon.

CN106587053A discloses a preparation process of special activated carbon for desulfurization, including the following steps: pressurization and pressure relief treatment; heat and freeze; explosion puffing; cold blow; carbonization; and activation. It is disclosed that magnesium powder and sodium hydroxide are mixed with raw materials to produce expansion effect and form large pore size. However, the reactivation temperature of still needs the carbonization furnace to provide external high-temperature environment.

CN103058186B discloses a method for preparing granular activated carbon from sawdust, including : a. Crush the sawdust to a certain particle size and dry it for standby; b. Phosphoric acid is mixed with the sawdust obtained in step a according to a certain large phosphorus wood ratio, and the cocatalyst sodium hydrogen phosphate is added to obtain the mixture; c. The mixture is successively impregnated at low temperature, plasticized, kneaded, extruded, dried, carbonized, activated, recycled, rinsed, dried, crushed and screened to obtain the product. The addition of a co activator is disclosed, thereby reducing the activation temperature and activation time. But the overall time is still relatively long, the temperature is also high.

At present, there are four general methods in the field of macroporous materials: 1. Colloidal crystal template and colloidal particle template method; 2. Micro floating liquid method; 3. Two-steps template method; 4. Biological template method (CN107140635A, CN107226470A). However, there has not been any disclosed existing technology that mainly relies on the energy of the material itself rather than the energy supply of the environment to carry out the microscopic macroporous modification of activated carbon. Therefore, it is particularly important to develop a convenient, low-energy, and rapid preparation method for macroporous activated carbon.

### Summary of the invention

In order to solve the above technical problems, the present invention provides a preparation method of stalactite-like macroporous activated carbon. The present invention discloses a preparation method for the first time to obtain the stalactite-like macroporous activated carbon in a low temperature environment, which shortens the activation time, and compresses the traditional activation time from more than 1h to only several minutes or even seconds. Therefore, the present invention greatly improves the preparation efficiency of macroporous activated carbon. Notably, the activating ambient temperature is reduced to 120°C~200°C in the present application from the traditional activating ambient temperature which is above 800°C.

In order to achieve the above-mentioned objectives, the present invention adopts the following technical solutions:
A method for preparing stalactite-like macroporous activated carbon comprises the following steps:
(1) The activated carbon precursor is weighed and placed in a ball mill with a rotating speed of 200 r/min ~ 1200 r/min and milled for 15min ~ 2h, then, the ball milled activated carbon precursor is pressed into flakes, and a heat conductive substrate is set on both sides of the activated carbon precursor respectively so that the activated carbon precursor is placed between the two heat conductive substrates;
(2) After weighing the high-temperature self-ignition agent and pressing it into a sheet shape, it is placed on the outer surface of each heat conductive substrate, with the inner surface of each heat conductive substrate adjacent to the activated carbon precursor;
(3) After weighing the low-temperature combustion-supporting agent and compressing it into tablets, it is placed on the outer surface of the high-temperature self-ignition agent, so that the raw materials form a sandwich structure of low-temperature combustion-supporting agent → high-temperature self-ignition agent → heat conductive substrate → activated carbon precursor in order from the outside to the inside;
(4) The sandwich structure is heated to 120 °C ~ 200 °C in a closed argon, nitrogen or vacuum atmosphere, and the low-temperature combustion supporting agent is ignited by the ambient temperature, meanwhile, the low-temperature combustion-supporting agent instantly generates a temperature of 1000°C or above to ignite the high-temperature self-ignition agent, therefore, the local temperature of activated carbon precursor on the heat conductive substrate is made above 1000 °C, when the activation is completed, cooling to the room temperature, the stalactite-like large activated carbon is obtained on the heat conductive substrate, characterized in that the mass ratio of the low-temperature combustion-supporting agent, the high-temperature self-ignition agent, the activated carbon precursor, and the heat conductive substrate is 0.3~1.5:8~15:1:0.5~1.

Further, in step (1), the activated carbon precursor is activated carbon and potassium hydroxide, and the mass ratio of the activated carbon and potassium hydroxide is 1:3.1~7.9.

Further, in step (2), the high-temperature self-ignition agent is iron powder and oxidant, and the mass ratio of iron powder and oxidant is 70~88:12~30.

Further, the oxidant is one or more of potassium perchlorate, lithium perchlorate and sodium perchlorate.

Further, in step (3), the low-temperature combustion-supporting agent is zirconium and barium chromate, and the mass ratio of the zirconium to barium chromate is 3~4:6~7.

Further, in steps (1), (2) and (3), the pressing pressure to compressing tablets is 10kpa ~ 2000kpa.

Further, in step (4), the activation time is 3s~2min.

Further, the heat conductive substrate is one of nickel, titanium, and platinum.

Further, the diameter of the heat conductive substrate is 18-130 mm.

Principle of this present application: This patent uses zirconium (Zr) and barium chromate, which having extremely high burning rates, as low-temperature combustion-supporting agent, which can't spontaneously combust at room temperature to ensure safety in use, and the burning rate can be controlled by adjusting the ratio of zirconium and barium chromate; The iron powder in the high-temperature self-ignition agent is seriously excessive to ensure that the oxidant and the iron powder react completely without generating excess oxygen and causing side reactions; The precursor of activated carbon uses potassium hydroxide to react with activated carbon to generate impact gas, which not only guarantees a sufficient source of impact gas but also does not cause side reactions with the heat conductive substrate, and the ratio of activated carbon to potassium hydroxide ensures complete reaction of potassium hydroxide, the morphology of macroporous activated carbon can be controlled by adjusting the ratio of activated carbon and potassium hydroxide, and their mass ratio determines the ratio and quality of high-temperature self-ignition agents; The heat conductive substrate uses a metal with high thermal conductivity and corrosion resistance to ensure the timely conduction of heat, so as to achieve a high-temperature local reaction temperature zone without side reactions with raw materials. The selection and dosage range of the materials make the preparation method of the present invention efficient and convenient.

In the present invention, commercially available ordinary finished activated carbon is selected as the carbon source, and the ordinary finished activated carbon has a wide source, many brands, and low price. Ordinary finished activated carbon is often used as a gas adsorbent, but all have a microporous structure (pore size <2nm). The finished activated carbon does not need to undergo a carbonization process, and the finished activated carbon is mixed uniformly with potassium hydroxide to become the "activated carbon precursor". Furthermore, the preparation method of the "deflagration method" proposed for the first time in the present invention is used for solid phase activation preparation. The biggest difference between "deflagration method" and traditional equipment is that it does not need to consider the heating process and heat preservation process of the equipment. The traditional "macroporous activation" is carried out under a "mild" condition, with a slow heating rate (<5°C/min) and a high temperature (>800°C) for more than 1h. The reason for this is to protect the safety of the equipment during the high-temperature heating stage. Because if the heating rate in the high-temperature stage is too fast, the temperature control of the equipment will fail, and the equipment will be damaged by "over-temperature" heating. The "deflagration method" innovatively uses the " stepped heating method" to instantly create a "local high temperature area". Because the heating equipment is in the low temperature section (≤200°C), there is no need to worry about instantaneous local high temperature reactor equipment damage. The low-temperature combustion-supporting agent is composed of zirconium and barium chromate. It can achieve an ultra-fast burning rate of 20cm/s~90cm/s at a temperature exceeding 120°C by screening and adjusting the ratio according to the particle size. So, it can rely on the low-temperature combustion aid to complete the rapid activation of the high-temperature self-ignition agent. The invention mainly relies on the material's own energy (iron powder and oxidant) to complete the entire "macroporous activation process". Among them, the high-temperature self-ignition agent takes iron and potassium perchlorate as examples, when the mass ratio of iron and potassium perchlorate is 80:20, the reaction temperature can reach 1538°C, equivalent to the high temperature when metal iron melts into liquid; When the mass ratio of iron and potassium perchlorate is 86:14, the reaction temperature can reach 1413°C; When the mass ratio of iron and potassium perchlorate is 88:12, the reaction temperature can reach 1369°C. The energy produced by the violent reaction of the high-temperature self-ignition agent acts on the potassium hydroxide of the activated carbon, which can make them instantly react violently, and realize the "macroporous activation" of the activated carbon by potassium hydroxide.

The reason why potassium salt is used instead of sodium salt is that potassium has a low boiling point (762°C) while sodium has a higher boiling point (883°C), so the high temperature reaction kinetics of potassium salt is faster. In the present invention, only potassium hydroxide is used for potassium salt because of its low molecular weight (56.1g/mol), so when compared with potassium carbonate (138.21g/mol), potassium bicarbonate (100.115g/mol), potassium acetate (98.14g/mol), potassium perchlorate (138.55g/mol), potassium permanganate (158.034g/mol) and other potassium salts, its molar amount in potassium hydroxide is higher under the same mass ratio. In the reaction, the molar mass determines the reaction amount instead of weight, so the use of potassium hydroxide has a larger reaction amount than other potassium salts. Moreover, it saves the volume of potassium salts. The entire activation reaction follows the following reaction equations:

2KOH→K₂O+H₂O (1)

C+H₂O→H₂+CO (2)

CO+H₂O→H₂+CO₂ (3)

K₂O+CO₂→K₂CO (4)

K₂O+H₂→2K+H₂O (5)

K₂O+C→2K+CO (6)

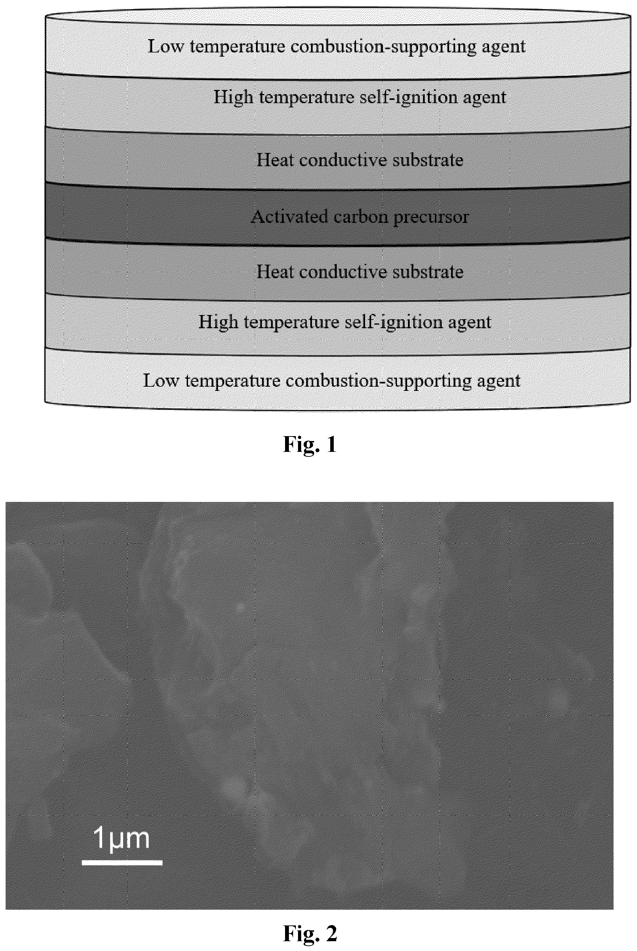

In the activation process, the carbon dioxide produced by the finished activated carbon is basically converted into carbonate in the form of reaction equation (4), that is, the carbon consumed in the activation process mainly generates potassium carbonate, which makes the finished activated carbon achieve the macroporous treatment in the form of activated carbon precursor. The macroporous activated carbon with similar morphology of stalactite is obtained. The morphology of the stalactite in the present invention is related to the mechanism of the present invention. Because the high-temperature reaction kinetics of the deflagration method is extremely fast (over 1000 °C in an instant and maintain a high temperature in a short period of time), therefore, the pore opening process of activated carbon with potassium hydroxide can be regarded as an accelerated water erosion process. The instantaneous high temperature region provided by the present invention makes potassium hydroxide and the finished activated carbon react violently on the contact interface, and finally obtains the SEM test images of the stalactite-like macroporous activated carbon, as shown in Fig. 2 - Fig. 5.

Since the present invention adopts the above technical solutions, it has the following beneficial effects:
(1) The invention for the first time discloses a preparation method for obtaining stalactite-like macroporous activated carbon in a low temperature environment, which shortens the activation time, compresses the traditional activation time from more than 1h to only several minutes or even few seconds, and greatly improves the preparation efficiency of macroporous activated carbon. The activating ambient temperature is reduced from 800 °C of traditional activating ambient temperature to 120 °C ~ 200 °C in the present application. It is the first to create a stepped local high temperature heating method to realize the macro porosity of activated carbon in a very short time. The power consumption of the equipment is greatly reduced. In addition, due to the reduction of the activating ambient temperature, the safety in the production process is also greatly improved. Therefore, it has the characteristics of simple production, fast reaction speed, and low environmental temperature required for reaction. The process from the preparation of raw materials to obtaining the stalactite-like macroporous activated carbon can be controlled within 1h, which can greatly improve the preparation efficiency of macroporous activated carbon. It has the advantages of high efficiency, high safety, low energy consumption and good morphology of activated carbon. It has high engineering application value.
(2) The invention uses zirconium and barium chromate to generate a strong oxidation-reduction reaction in a relatively low temperature range of 120°C to 200°C. Zirconium and barium chromate can generate a temperature of 1000°C or above at the moment of combustion, while the iron powder and a strong oxidant are ignited. The high-temperature self-ignition agent reacts more violently, keeping the impact temperature above 1000°C in a short period of time. Potassium ions in the activated carbon precursor form potassium vapor, which diffuses into the carbon framework and reacts to produce carbon dioxide, carbon monoxide, and a small amount hydrogen and other gases violently impact the microscopic surface of activated carbon materials. Therefore, a series of processes have a significant impact on their specific surface and pore structure, resulting in stalactite-like macroporous activated carbon. Moreover, there is a serious excess of iron powder in the high-temperature self-ignition agent in order to fully contact and react with the strong oxidant to avoid the generation of excess oxygen and the side reaction of activated carbon to generate carbon dioxide which will damage the raw materials. In addition, the proportion of strong oxidant is adjusted to control the specific heat value, so as to control the reaction time.
(3) The invention uses zirconium and barium chromate as the combustion-supporting agent. The working temperature of the combustion-supporting agent is significantly higher than room temperature without spontaneous combustion at room temperature. It has good safety. Moreover, its activation temperature is significantly lower than the traditional activated carbon activation temperature which is above 800°C. The energy consumption of activation is greatly reduced. In the local area in the low temperature environment of 120°C~200°C, the high temperature of over 1000°C can be maintained in a short time by the energy of the material itself. Therefore, it shortens the activation time from more than 1h of the traditional activation time to only several minutes or even few seconds in the present application, so that the activation efficiency is greatly improved.
(4) The invention pioneered the "deflagration method". This method provides a beginning for the preparation of macroporous materials. It has extremely high innovative value and industrial production value. The prepared macroporous activated carbon has good shape, high efficiency and low energy consumption, simple preparation, high throughput, and huge advantages that existing technologies can't achieve.
(5) The invention pioneered the gradient local high-temperature heating method, creating a stepped rapid heating method, realizing the macro porosity of activated carbon in a very short time. It breaks the conventional thinking of "under the same other conditions, within a certain range, the increase in activation time will help improving the activation effect, that is, shortening the activation time, the activation effect will become worse.", and can activate in a short time and ensure the activation effect.
(6) Since the product activated carbon is directly used for macroporous activation treatment instead of carbonization process, the invention has no special requirements on the original micro morphology of the finished activated carbon, and the activated carbon with any morphology can be used for fast, low energy consumption and simple macroporous treatment.

### Brief description of the drawings

In order to more clearly explain the technical solutions in the examples of the present invention or the prior art, the following will briefly introduce the drawings required in the implementation examples or the description of the prior art. Obviously, the drawings in the following description are just some examples of the present invention. For those of ordinary skill in the art, other drawings can be obtained from these drawings without being creative:
Figure 1 is a schematic diagram of a sandwich structure from which to make stalactite-like macroporous activated carbon of the present invention;
Figure 2 is an SEM image of stalactite-like macroporous activated carbon prepared in Example 1 of the present invention;
Figure 3 is an SEM image of stalactite-like macroporous activated carbon prepared in Example 2 of the present invention;
Figure 4 is an SEM image of stalactite-like macroporous activated carbon prepared in Example 3 of the present invention;
Figure 5 is an SEM image of stalactite-like macroporous activated carbon prepared in Example 4 of the present invention.

### Detailed description of the embodiments

The specific embodiments of the present invention will be described in further detail below.

### Example 1

A preparation method of stalactite-like macroporous activated carbon includes the following steps:
(1) According to the mass ratio of 1:5, the activated carbon and potassium hydroxide with a total mass of 180g are taken as the precursor of activated carbon, and placed in a ball milling pot with the rotating speed of 200 r/min ~ 1200 r/min, and the mixture is evenly milled for 15min - 2h, and evenly divided into 10 parts, each weights 18g. Then, the ball milled activated carbon precursor is pressed into flakes, and a heat conductive substrate is set on each side of the activated carbon precursor to make the activated carbon precursor located between two sheets of the heat conductive substrates;
(2) Iron powder and potassium perchlorate are weighed as high-temperature self-ignition agents according to a mass ratio of 83:17, and after being pressed into flakes, they are placed on the outer surface of the heat conductive substrate, the inner surface of each sheet of the heat conductive substrates is adjacent to the activated carbon precursor respectively; using potassium perchlorate as an oxidant;
(3) Weigh zirconium and barium chromate as a low-temperature combustion-supporting agent according to a mass ratio of 1:2, press them into flakes, and place them on the outer surface of the high-temperature self-ignition agent, so that the raw materials form a sandwich structure of low-temperature combustion-supporting agent → high-temperature self-ignition agent → heat conductive substrate → activated carbon precursor in order from the outside to the inside;
(4) The 10 above sandwich structures are placed in a closed nitrogen atmosphere and heated to 120 °C ~ 200 °C, while the ambient temperature is used to ignite the low-temperature combustion-supporting agent. Meanwhile, the low-temperature combustion-supporting agent instantly generates a temperature of 1000°C or above to ignite the high-temperature self-ignition agent. Therefore, a series of methods make the local temperature of the activated carbon precursor on the heat conductive substrate above 1000 °C, and then complete the activation. The activation time is 3s ~ 2min. After cooling to room temperature, stalactite-like macroporous activated carbon is obtained on the heat conductive substrate.

Further, the mass ratio of the low-temperature combustion-supporting agent, the high-temperature self-ignition agent, the activated carbon precursor, and the heat conductive substrate is 0.5:10:1:1. In steps (1), (2) and (3), the pressing pressure of compressing tablet is 10kp ~ 2000kpa; the heat conductive substrate is nickel, and the diameter of the heat conductive substrate is 18 ~ 130mm. The micro morphology of the stalactite-like macroporous activated carbon in this example is shown in Fig. 2.

### Example 2

A preparation method of stalactite-like macroporous activated carbon includes the following steps:
(1) According to the mass ratio of 1:5, the activated carbon and potassium hydroxide with a total mass of 180g are taken as the precursor of activated carbon, and placed in a ball milling pot with the rotating speed of 200 r/min ~ 1200 r/min, and the mixture is evenly milled for 15min - 2h, and evenly divided into 10 parts, each weights 18g. Then, the ball milled activated carbon precursor is pressed into flakes, and one heat conductive substrate is set on each side of the activated carbon precursor respectively to make the activated carbon precursor located between the two sheets of the thermal heat substrates;
(2) Iron powder and potassium perchlorate are weighed as high-temperature self-ignition agents according to a mass ratio of 83:17, and after being pressed into flakes, they are placed on the outer surface of the heat conductive substrate, with the inner surface of each sheet of the heat conductive substrates is adjacent to the activated carbon precursor respectively; The potassium perchlorate is used as an oxidant;
(3) Weigh zirconium and barium chromate as a low-temperature combustion-supporting agent according to a mass ratio of 1:2, press them into flakes, and place them on the outer surface of the high-temperature self-ignition agent, so that the raw materials form a sandwich structure of low-temperature combustion-supporting agent → high-temperature self-ignition agent → heat conductive substrate → activated carbon precursor in order from the outside to the inside;
(4) The 10 above sandwich structures are placed in a closed argon, nitrogen or vacuum atmosphere and heated to 120 °C ~ 200 °C, while the ambient temperature is used to ignite the low-temperature combustion-supporting agent. Meanwhile, the low-temperature combustion-supporting agent instantly generates a temperature of 1000°C or above to ignite the high-temperature self-ignition agent. Therefore, the local temperature of the activated carbon precursor on the heat conductive substrate is made above 1000 °C, and then complete the activation. The activation time is 3s ~ 2min. After cooling to room temperature, stalactite-like macroporous activated carbon is obtained on the heat conductive substrate.

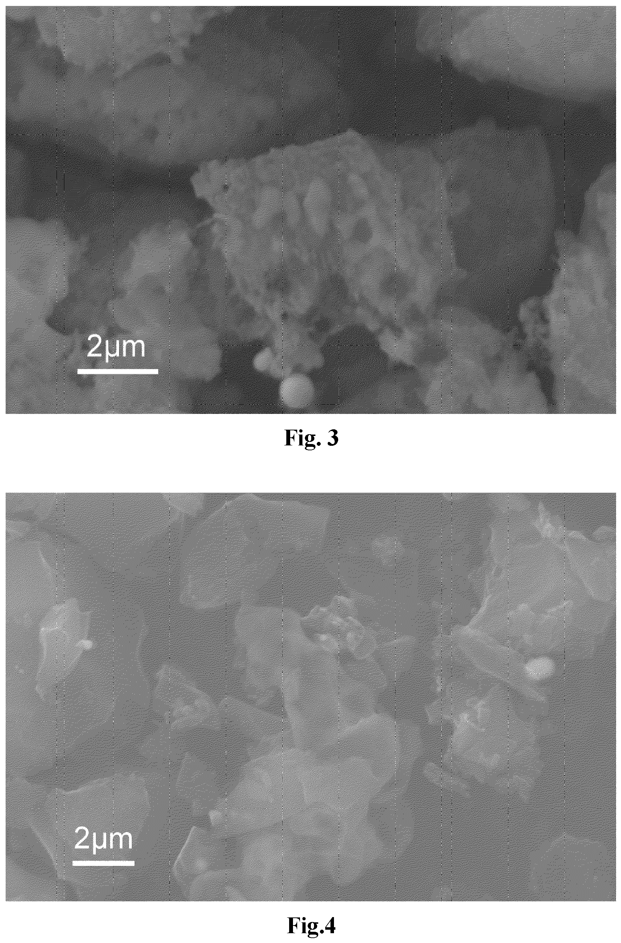

Further, the mass ratio of the low-temperature combustion-supporting agent, the high-temperature self-ignition agent, the activated carbon precursor, and the heat conductive substrate is 0.5:10:1:1. In steps (1), (2) and (3), the pressing pressure of the compressing tablet is 10kp ~ 2000kpa, the heat conductive substrate is titanium, and the diameter of the heat conductive substrate is 18 ~ 130mm. The micro morphology of the stalactite-like macroporous activated carbon in this example is shown in Fig. 3.

### Example 3

A preparation method of stalactite-like macroporous activated carbon includes the following steps:
(1) According to the mass ratio of 1:4, the activated carbon and potassium hydroxide with a total mass of 180g are taken as the precursor of activated carbon, and placed in a ball milling pot with the rotating speed of 200 r/min ~ 1200 r/min, and the mixture is evenly milled for 15min - 2h, and evenly divided into 10 parts, each weights 18g. Then, the ball milled activated carbon precursor is pressed into flakes, and a heat conductive substrate is set on each side of the activated carbon precursor respectively to make the activated carbon precursor located between the two heat conductive substrates;
(2) Iron powder and sodium perchlorate are weighed as high-temperature self-ignition agents according to a mass ratio of 83:17, and after being pressed into flakes, they are placed on the outer surface of the heat conductive substrates with the inner surface of each sheet of the heat conductive substrates is adjacent to the activated carbon precursor respectively; The sodium perchlorate is used as an oxidant;
(3) Weigh zirconium and barium chromate as a low-temperature combustion-supporting agent according to a mass ratio of 1:2, press them into flakes, and place them on the outer surface of the high-temperature self-ignition agent, so that the raw materials form a sandwich structure of low-temperature combustion-supporting agent → high-temperature self-ignition agent → heat conductive substrate → activated carbon precursor in order from the outside to the inside;
(4) The 10 above sandwich structures are placed in a closed argon atmosphere and heated to 120 °C ~ 200 °C, while the ambient temperature is used to ignite the low-temperature combustion-supporting agent. Meanwhile, the low-temperature combustion-supporting agent instantly generates a temperature of 1000°C or above to ignite the high-temperature self-ignition agent. Therefore, the local temperature of the activated carbon precursor on the heat conductive substrate is made above 1000 °C, and then complete the activation. The activation time is 3s ~ 2min. After cooling to room temperature, stalactite-like macroporous activated carbon is obtained on the heat conductive substrate.

Further, the mass ratio of the low-temperature combustion-supporting agent, the high-temperature self-ignition agent, the activated carbon precursor, and the heat conductive substrate is 0.5:15:1:1. In steps (1), (2) and (3), the pressing pressure of the compressing tablet is 10kp ~ 2000kpa, the heat conductive substrate is one of nickel, titanium and platinum, and the diameter of the heat conductive substrate is 18 ~ 130mm. The micro morphology of the stalactite-like macroporous activated carbon in this example is shown in Fig. 4.

### Example 4

A preparation method of stalactite-like macroporous activated carbon includes the following steps:
(1) According to the mass ratio of 1:4, the activated carbon and potassium hydroxide with a total mass of 180g are taken as the precursor of activated carbon, and placed in a ball milling pot with the rotating speed of 200 r/min ~ 1200 r/min, and the mixture is evenly milled for 15min - 2h, and evenly divided into 10 parts, each weights 18g. Then, the ball milled activated carbon precursor is pressed into flakes, and a heat conductive substrate is set on each side of the activated carbon precursor respectively to make the activated carbon precursor located lie between the two heat conductive substrates;
(2) Iron powder and lithium perchlorate are weighed as high-temperature self-ignition agents according to a mass ratio of 80:20, and after being pressed into flakes, they are placed on the outer surface of the heat conductive substrate with the inner surface of each sheet of the heat conductive substrates is adjacent to the activated carbon precursor; The lithium perchlorate is used as an oxidant;
(3) Weigh zirconium and barium chromate as a low-temperature combustion-supporting agent according to a mass ratio of 1:2, press them into flakes, and place them on the outer surface of the high-temperature self-ignition agent, so that the raw materials form a sandwich structure of low-temperature combustion-supporting agent → high-temperature self-ignition agent → heat conductive substrate → activated carbon precursor in order from the outside to the inside;
(4) The 10 above sandwich structures are placed in a closed vacuum atmosphere at -0.9 Mpa and heated to 120 °C ~ 200 °C, while the ambient temperature is used to ignite the low-temperature combustion-supporting agent. Meanwhile, the low-temperature combustion-supporting agent instantly generates a temperature of 1000°C or above to ignite the high-temperature self-ignition agent. Therefore, the local temperature of the activated carbon precursor on the heat conductive substrate is made above 1000 °C, and then complete the activation. The activation time is 3s ~ 2min. After cooling to room temperature, stalactite-like macroporous activated carbon is obtained on the heat conductive substrate.

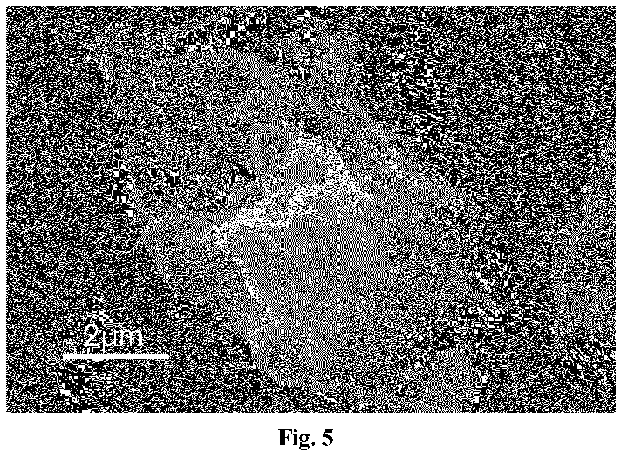

Further, the mass ratio of the low-temperature combustion-supporting agent, the high-temperature self-ignition agent, the activated carbon precursor, and the heat conductive substrate is 0.5:12:1:1. In steps (1), (2) and (3), the pressing pressure of the compressing tablet is 10kp ~ 2000kpa, the heat conductive substrate is one of nickel, titanium and platinum, and the diameter of the heat conductive substrate is 18 ~ 130mm. The micro morphology of the stalactite-like macroporous activated carbon in this example is shown in Fig. 5.

### The proportion of 1

The preparation of activated carbon was carried out according to the examples described in CN107226470A.

### The proportion of 2

The preparation of activated carbon was carried out according to the examples described in CN107140635A.

### The proportion of 3

The preparation of activated carbon was carried out according to the examples described in CN109179404A.

### The proportion of 4

The preparation of activated carbon was carried out according to the examples described in CN109081344A.

### The proportion of 5

The preparation of activated carbon was carried out according to the examples described in CN102442665A.

### The proportion of 6

The preparation of activated carbon was carried out according to the method of the Appl. Sci., 2017,7,1036.

### The proportion of 7

The preparation of activated carbon was carried out according to the method of the J. Power Sources, 342 (2017) 363-370.

### The proportion of 8

The preparation of activated carbon was carried out according to the method of the J. Alloys Compd., 693 (2017) 1297-1304.

The methods of Examples 1 to 4 and Comparative Examples 1 to 8 of this application are used to prepare activated carbon, and the activating ambient temperature and activation time of each group are recorded. The experimental results are shown in Table 1 below.

**Table 1**

| group | Activating ambient temperature | Activation time |
|---|---|---|
| Example 1 | 180°C | 20s |
| Example 2 | 150°C | 20s |
| Example 3 | 120°C | 3s |
| Example 4 | 200°C | 10s |
| The proportion of 1 | 700°C~1000°C | 1h~3.5h |
| The proportion of 2 | 700°C~1000°C | 1h~3.5h |
| The proportion of 3 | 800°C~950°C | 2h-3h |
| The proportion of 4 | 850°C | 1h |
| The proportion of 5 | 1850°C | 1h |
| The proportion of 6 | 700°C~800°C | 1h~3h |
| The proportion of 7 | 600~800°C | 1h |
| The proportion of 8 | 900°C | 2h |

From the experimental data in Table 1, it can be seen that, compared with the existing technology, the activated carbon preparation method of the present application has a shorter activation time and requires a lower activating ambient temperature.

In summary, the present invention can obtain stalactite-like macroporous activated carbon in a low temperature environment, shorten the activation time, compress the traditional activation time from more than 1 hour to several minutes or even seconds, and reduce the traditional activating ambient temperature from above 800 °C to 120°C~200°C. It is the first to create a gradient local high temperature heating method to realize the large pore size of activated carbon in a very short time. The power consumption of the equipment is greatly reduced, the reaction speed is fast, and the reaction environment temperature is low, which can greatly improve the preparation efficiency of macroporous activated carbon. It has the advantages of high efficiency, high safety, low energy consumption and good morphology of activated carbon. It has high engineering application value.

## Claims

1. A preparation method of stalactite-like macroporous activated carbon, **characterized in that** it comprises the following steps:
(1) The activated carbon precursor is weighed and placed in a ball mill with a rotating speed of 200 r/min ~ 1200 r/min and milled for 15min ~ 2h; Then, the ball milled activated carbon precursor is pressed into flakes, and a heat conductive substrate is set on each side of the activated carbon precursor respectively to make the activated carbon precursor being placed between the two sheets of the heat conductive substrates;
(2) After weighing the high-temperature self-ignition agent and pressing it into flakes, it is placed on the outer surface of the heat conductive substrate ;
(3) After weighing the low-temperature combustion-supporting agent and compressing it into flakes, it is placed on the outer surface of the above-mentioned high-temperature self-ignition agent, so that the raw materials form a sandwich structure of low-temperature combustion-supporting agent → high-temperature self-ignition agent → heat conductive substrate → activated carbon precursor in the order from the outside to the inside;
(4) The sandwich structure is heated to 120 °C ~ 200 °C in a closed argon, nitrogen or vacuum atmosphere, and the low-temperature combustion supporting agent is ignited by the ambient temperature; Meanwhile, the low-temperature combustion-supporting agent instantly generates a temperature of 1000°C or above to ignite the high-temperature self-ignition combustion-supporting agent; Therefore, the local temperature of activated carbon precursor on the heat conductive substrate is made above 1000 °C; When the activation is completed, the stalactite-like large activated carbon is obtained on the heat conductive substrate after cooling to the room temperature;
In step (1), the activated carbon precursor is activated carbon and potassium hydroxide, and the mass ratio of the activated carbon and potassium hydroxide is 1:3.1~7.9;
In step (2), the high-temperature self-ignition agent is iron powder and oxidant, and the mass ratio of iron powder and oxidant is 70~88:12~30;
In step (3), the low-temperature combustion-supporting agent is zirconium and barium chromate, and the mass ratio of the zirconium to barium chromate is 3~4:6~7, **characterized in that**: the mass ratio of the low-temperature combustion-supporting agent, the high-temperature self-ignition agent, the precursor of activated carbon and the heat conductive substrate is 0.3~1.5 : 8~15:1: 0.5~1.

2. A method for preparing stalactite-like macroporous activated carbon according to claim 1, **characterized in that**: the oxidant is one or more of potassium perchlorate, lithium perchlorate, and sodium perchlorate.

3. A method for preparing stalactite-like macroporous activated carbon according to claim 1, **characterized in that**: in steps (1), (2) and (3), the pressing pressure of compressing tablets is 10kpa ~ 2000kpa.

4. A method for preparing stalactite-like macroporous activated carbon according to claim 1, **characterized in that**: in step (4), the activation time is 3s~2min.

5. A method for preparing stalactite-like macroporous activated carbon according to claim 1, **characterized in that**: the heat conductive substrate is one of nickel, titanium, and platinum.

6. A method for preparing stalactite-like macroporous activated carbon according to claim 1, **characterized in that**: the diameter of the heat conductive substrate is 18-130 mm.

## Patentansprüche

1. Verfahren zur Herstellung von stalaktitähnlicher makroporöser Aktivkohle, **dadurch gekennzeichnet, dass** es die folgenden Schritte umfasst:
(1) Der Aktivkohlevorläufer wird abgewogen und in eine Kugelmühle mit einer Rotationsgeschwindigkeit von 200 U/min bis 1200 U/min eingebracht und für 15 min bis 2 h gemahlen; dann wird der kugelgemahlene Aktivkohlevorläufer zu Plättchen verpresst, und es wird auf jeder Seite des Aktivkohlevorläufers jeweils ein wärmeleitendes Substrat aufgebracht, um den Aktivkohlevorläufer zwischen den beiden Lagen der wärmeleitenden Substrate anzuordnen;
(2) nach dem Abwiegen des Hochtemperatur-Selbstentzündungsmittels und dem Verpressen desselben zu Plättchen wird es auf der äußeren Oberfläche des wärmeleitenden Substrats angeordnet;
(3) nach dem Abwiegen des Niedertemperatur-Brandfördermittels und Verpressen desselben zu Plättchen wird es auf der äußeren Oberfläche des oben genannten Hochtemperatur-Selbstentzündungsmittels angeordnet, so dass die Rohstoffe in der Reihenfolge von außen nach innen eine SandwichStruktur aus Niedertemperatur-Brandfördermittel → Hochtemperatur-Selbstentzündungsmittel → wärmeleitendem Substrat → Aktivkohlevorläufer bilden;
(4) die Sandwichstruktur wird in einer geschlossenen Argon-, Stickstoff- oder Vakuumatmosphäre auf 120 °C bis 200 °C erhitzt, und das Niedertemperatur-Brandfördermittel wird durch die Umgebungstemperatur entzündet; währenddessen erzeugt das Niedertemperatur-Brandfördermittel augenblicklich eine Temperatur von 1000 °C oder mehr, um das Hochtemperatur-Selbstentzündungs-Brandfördermittel zu entzünden; daher wird die lokale Temperatur des Aktivkohlevorläufers auf dem wärmeleitenden Substrat auf über 1000 °C gebracht; wenn die Aktivierung abgeschlossen ist, wird nach dem Abkühlen auf Raumtemperatur auf dem wärmeleitenden Substrat die stalaktitähnliche große Aktivkohle erhalten;
in Schritt (1) ist der Aktivkohlevorläufer Aktivkohle und Kaliumhydroxid, und das Massenverhältnis von Aktivkohle und Kaliumhydroxid beträgt 1 : 3,1 bis 7,9;
in Schritt (2) ist das Hochtemperatur-Selbstentzündungsmittel Eisenpulver und Oxidationsmittel, und das Massenverhältnis von Eisenpulver und Oxidationsmittel beträgt 70 bis 88 : 12 bis 30;
in Schritt (3) ist das Niedertemperatur-Brandfördermittel Zirkonium und Bariumchromat, und das Massenverhältnis von Zirkonium zu Bariumchromat beträgt 3 bis 4 : 6 bis 7, **dadurch gekennzeichnet, dass**: das Massenverhältnis des Niedertemperatur-Brandfördermittels, des Hochtemperatur-Selbstentzündungsmittels, des Vorläufers von Aktivkohle und des wärmeleitenden Substrats 0,3 bis 1,5 : 8 bis 15 : 1 : 0,5 bis 1 beträgt.

2. Verfahren zur Herstellung von stalaktitähnlicher makroporöser Aktivkohle nach Anspruch 1, **dadurch gekennzeichnet, dass**: das Oxidationsmittel eines oder mehrere von Kaliumperchlorat, Lithiumperchlorat und Natriumperchlorat ist.

3. Verfahren zur Herstellung von stalaktitähnlicher makroporöser Aktivkohle nach Anspruch 1, **dadurch gekennzeichnet, dass**: in den Schritten (1), (2) und (3) der Pressdruck für das Verpressen zu Plättchen 10 kpa bis 2000 kpa beträgt.

4. Verfahren zur Herstellung von stalaktitähnlicher makroporöser Aktivkohle nach Anspruch 1, **dadurch gekennzeichnet, dass**: in Schritt (4) die Aktivierungszeit 3 s bis 2 min beträgt.

5. Verfahren zur Herstellung von stalaktitähnlicher makroporöser Aktivkohle nach Anspruch 1, **dadurch gekennzeichnet, dass**: das wärmeleitende Substrat eines von Nickel, Titan und Platin ist.

6. Verfahren zur Herstellung von stalaktitähnlicher makroporöser Aktivkohle nach Anspruch 1, **dadurch gekennzeichnet, dass**: der Durchmesser des wärmeleitenden Substrats 18 bis 130 mm beträgt.

## Revendications

1. Procédé de préparation de charbon actif macroporeux de type stalactite, **caractérisé en ce qu'**il comprend les étapes suivantes :
(1) le précurseur de charbon actif est pesé et placé dans un broyeur à boulets avec une vitesse de rotation de 200 tr/min - 1 200 tr/min et broyé pendant 15 minutes - 2h ; Ensuite, le précurseur de charbon actif passé au broyeur à boulets est pressé en flocons, et un substrat thermoconducteur est installé de chaque côté du précurseur de charbon actif respectivement pour que le précurseur de charbon actif soit placé entre les deux feuilles des substrats thermoconducteurs ;
(2) après avoir pesé l'agent d'auto-allumage à haute température et l'avoir pressé en flocons, il est placé sur la surface externe du substrat thermoconducteur ;
(3) après avoir pesé l'agent supportant la combustion à basse température et l'avoir comprimé en flocons, il est placé sur la surface externe de l'agent d'auto-allumage à haute température susmentionné, de sorte que les matières premières forment une structure en sandwich d'agent supportant la combustion à basse température -> agent d'auto-allumage à haute température -> substrat thermoconducteur -> précurseur de charbon actif dans l'ordre allant de l'extérieur vers l'intérieur ;
(4) la structure en sandwich est chauffée à 120 °C à 200 °C dans une atmosphère fermée d'argon, d'azote ou de vide, et l'agent supportant la combustion à basse température est allumé par la température ambiante ; Pendant ce temps, l'agent supportant la combustion à basse température génère instantanément une température de 1 000 °C ou plus pour allumer l'agent supportant la combustion d'auto-allumage à haute température ; Par conséquent, la température locale du précurseur de charbon actif sur le substrat thermoconducteur est amenée au-dessus de 1 000 °C ; Lorsque l'activation est terminée, le charbon actif de type stalactite de grande taille est obtenu sur le substrat thermoconducteur après refroidissement à la température ambiante ;
dans l'étape (1), le précurseur de charbon actif est du charbon actif et de l'hydroxyde de potassium, et le rapport massique entre le charbon actif et l'hydroxyde de potassium est de 1 : 3,1 à 7,9 ;
dans l'étape (2), l'agent d'auto-allumage à haute température est de la poudre de fer et un oxydant, et le rapport massique entre la poudre de fer et l'oxydant est de 70 à 88 : 12 à 30 ;
dans l'étape (3), l'agent supportant la combustion à basse température est du zirconium et du chromate de baryum, et le rapport massique entre le zirconium et le chromate de baryum est de 3 à 4 : 6 à 7, **caractérisé en ce que** : le rapport massique entre l'agent supportant la combustion à basse température, l'agent d'auto-allumage à haute température, le précurseur de charbon actif et le substrat thermoconducteur est de 0,3 à 1,5 : 8 à 15: 1: 0,5 à 1.

2. Procédé de préparation de charbon actif macroporeux de type stalactite selon la revendication 1, **caractérisé en ce que** l'oxydant est un ou plusieurs parmi le perchlorate de potassium, le perchlorate de lithium et le perchlorate de sodium.

3. Procédé de préparation de charbon actif macroporeux de type stalactite selon la revendication 1, **caractérisé en ce que** : dans les étapes (1), (2) et (3), la pression de compression des comprimés est de 10 kPa 2 000 kPa.

4. Procédé de préparation de charbon actif macroporeux de type stalactite selon la revendication 1, **caractérisé en ce que** dans l'étape (4), le temps d'activation est de 3 s à 2 min.

5. Procédé de préparation de charbon actif macroporeux de type stalactite selon la revendication 1, **caractérisé en ce que** le substrat thermoconducteur est l'un parmi le nickel, le titane et le platine.

6. Procédé de préparation de charbon actif macroporeux de type stalactite selon la revendication 1, **caractérisé en ce que** le diamètre du substrat thermoconducteur est de 18 à 130 mm.
